# EUROPÄISCHE PATENTANMELDUNG

(11) **EP 4 094 560 A1**
(43) Veröffentlichungstag der Anmeldung: **30.11.2022**
(21) Anmeldenummer: 21176285.1
(22) Anmeldetag: 27.05.2021
(51) Int. Cl.: A01D 34/16, A01D 34/22

(54) **MESSER, INSBESONDERE FÜR EIN MÄHWERK EINER LANDWIRTSCHAFTLICHEN MASCHINE**

(71) Anmelder: SMF - Holding GmbH, 57612 Eichelhardt (DE)
(72) Erfinder: OTTO, Sascha, 57612 Racksen (DE); SCHMIDT, Ralf, 57629 Mörsbach (DE); SCHNEIDER, Rene, 57580 Gebhardshain (DE)
(74) Vertreter: Neumann Müller Oberwalleney Patentanwälte PartG mbB

(57) **Zusammenfassung**

Messer (1), insbesondere für ein Mähwerk einer landwirtschaftlichen Maschine, umfassend:
einen Messerrücken (2), der zumindest entlang einer Längsachse (L) einen Befestigungsabschnitt (4) mit einem konstanten Umfangsprofil aufweist, wobei der Befestigungsabschnitt (4) eine Befestigungsfläche (20) zum Befestigen einer Mehrzahl von Messerklingen (3) aufweist, und
mehrere Messerklingen (3) mit jeweils einem Befestigungsabschnitt (8) mit einer Befestigungsfläche (19), mit der die Messerklingen (3) jeweils an der Befestigungsfläche (20) des Messerrückens (2) anliegen, wobei die Messerklingen (3) jeweils aus einem Material hergestellt sind, das eine Materialstärke (D_{K}) aufweist, die, in einer Dickenrichtung (H) des Materials, geringer ist als die Höhe (H_{K}) der Messerklingen (3) quer zur Befestigungsfläche (19),
wobei die Befestigungsfläche (20) des Messerrückens (2) und die Befestigungsflächen (19) der Messerklingen (3) im Querschnitt komplementär zueinander profiliert ausgebildet sind,
**dadurch gekennzeichnet,**
dass zumindest der Befestigungsabschnitt (4) des Messerrückens (2) aus einem Material hergestellt ist, das eine Materialstärke (D_{R}) aufweist, die, in einer Dickenrichtung (H) des Materials, geringer ist als die Höhe (H_{R}) des Befestigungsabschnitts (4) des Messerrückens (2) quer zur Befestigungsfläche (20).

## Beschreibung

Die Erfindung betrifft ein Messer, insbesondere für ein Mähwerk einer landwirtschaftlichen Maschine, mit einem Messerrücken, der zumindest entlang einer Längsachse einen Befestigungsabschnitt mit einem konstanten Umfangsprofil aufweist, wobei der Befestigungsabschnitt eine Befestigungsfläche zum Befestigen einer Mehrzahl von Messerklingen aufweist. Das Messerrücken weist ferner mehrere Messerklingen mit jeweils einem Befestigungsabschnitt mit einer Befestigungsfläche auf, mit der die Messerklingen jeweils an der Befestigungsfläche des Messerrückens anliegen, wobei die Messerklingen jeweils aus einem Material hergestellt sind, das eine Materialstärke aufweist, die, in einer Dickenrichtung des Materials, geringer ist als die Höhe der Messerklingen quer zur Befestigungsfläche. Die Befestigungsfläche des Messerrückens und die Befestigungsflächen der Messerklingen sind im Querschnitt komplementär zueinander profiliert ausgebildet.

Ein solches Messer ist aus der GB 1910 07939 A bekannt. Der Messerrücken weist eine mehreren Messerklingen zugewandte Ausnehmung auf, die im Querschnitt bogenförmig gestaltet ist und sich über annähernd die gesamte Länge des Messerrückens erstreckt. Die Messerklingen sind aus Blech hergestellt und weisen jeweils einen Befestigungsabschnitt auf, der komplementär zum Querschnitt der Nut umgeformt ist. Die Befestigungsabschnitte weisen somit eine konvexe Ausbuchtung auf, mit der die Messerklingen in der Ausnehmung des Messerrückens angeordnet sind. Die Messerklingen sind über in der Ausnehmung angeordnete hinterschnittene Nocken, hinter die die Messerklingen eingreifen, gehalten.

Ein weiteres Messer ist aus der US 493 054 A bekannt. Der Messerrücken weist eine mehreren Messerklingen zugewandte Nut auf, die im Querschnitt rechteckig ausgebildet ist und sich über annähernd die gesamte Länge des Messerrückens erstreckt. Die Messerklingen weisen jeweils, an einer dem Messerrücken zugewandten Unterseite, eine im Querschnitt rechteckige Rippe auf, die in der Nut des Messerrückens formschlüssig sitzt. Die Messerklingen sind jeweils mittels einer Befestigungsschraube am Messerrücken befestigt.

Messer dieser Art werden üblicherweise bei Mähwerken von landwirtschaftlichen Erntemaschinen verwendet. Eine Vielzahl von Messerklingen ist hierbei nebeneinander angeordnet auf einem Messerrücken verschraubt oder vernietet, wobei die Messerspitzen, die durch spitz zulaufende Schneidenabschnitte gebildet sind, in eine Arbeitsrichtung weisen. Die so gebildeten Messer sind an einem Messerbalken quer zur Arbeitsrichtung hin- und herbewegend geführt. Die Schneiden der Messerklingen wirken hierbei mit am Messerbalken vorgesehenen Gegenschneiden, zum Beispiel an am Messerbalken befestigten Mähfingern, zusammen. Die Mähfinger können hierbei ein Oberteil und ein Unterteil aufweisen, die zusammen einen Klingenspalt zwischen sich ausbilden, in dem das Messer mit den Messerklingen geführt ist.

Die Schneiden der Messerklingen sind meist winklig zur Arbeitsrichtung ausgerichtet und die Gegenschneiden der Mähfinger annähernd parallel zur Arbeitsrichtung, so dass das Erntegut in einen Schneidbereich zwischen den Messerklingen und den Mähfingern eintauchen kann und durch die Hin- und Herbewegung des Mähmessers abgeschnitten wird.

Eine Materialstärke der Messerklinge ist so auf das lichte Maß des Klingenspalts angepasst, dass ein gewisser Abstand zwischen der Messerklinge und der jeweiligen Gegenschneide vorhanden ist, da das lichte Maß des Klingenspalts einer Toleranz unterliegt und die Messerklinge im Betrieb durch einwirkende Kräfte des Ernteguts gebogen wird. Andererseits darf der Abstand zwischen der Messerklinge und der jeweiligen Gegenschneide nicht zu groß sein, da dann Erntegut in den Klingenspalt eingezogen werden kann und nicht geschnitten wird. Der Materialeinsatz zur Herstellung von Messerklingen entsprechender Dicke ist vergleichsweise hoch. Dementsprechend sind mit den Messerklingen erhebliche Massen durch den Messerantrieb hin und her zu bewegen.

Aufgabe der vorliegenden Erfindung ist es, ein Messer bereitzustellen, das einfach herzustellen ist und eine geringe Masse aufweist.

Die Erfindung wird durch ein Messer geöst, insbesondere für ein Mähwerk einer landwirtschaftlichen Maschine, mit einem Messerrücken, der zumindest entlang einer Längsachse einen Befestigungsabschnitt mit einem konstanten Umfangsprofil aufweist, wobei der Befestigungsabschnitt eine Befestigungsfläche zum Befestigen einer Mehrzahl von Messerklingen aufweist. Das Messer weist ferner mehrere Messerklinge mit jeweils einem Befestigungsabschnitt mit einer Befestigungsfläche auf, mit der die Messerklingen jeweils an der Befestigungsfläche des Messerrückens anliegen, wobei die Messerklingen jeweils aus einem Material hergestellt sind, das eine Materialstärke aufweist, die, in einer Dickenrichtung des Materials, geringer ist als die Höhe der Messerklingen quer zur Befestigungsfläche. Die Befestigungsfläche des Messerrückens und die Befestigungsflächen der Messerklingen sind im Querschnitt komplementär zueinander profiliert ausgebildet. Zumindest der Befestigungsabschnitt des Messerrückens ist aus einem Material hergestellt, das eine Materialstärke aufweist, die, in einer Dickenrichtung des Materials, geringer ist als die Höhe des Befestigungsabschnitts des Messerrückens quer zur Befestigungsfläche.

Somit ist der Messerrücken zumindest im Bereich des Befestigungsabschnitts aus einem Material hergestellt, dessen Materialstärke geringer ist als die Höhe des Befestigungsabschnitts des Messerrückens, wodurch sich eine Massenreduktion gegenüber herkömmlichen Messerrücken aus massiven Vollmaterialien ergibt. Ferner sind auch die Messerklingen aus einem Material hergestellt, dessen Materialstärke geringer ist als die Höhe der Messerklingen, wodurch die Masse weiter reduziert ist.

Die geringere Masse des Messers führt zu geringeren Massenträgheitsmomenten beim Antreiben des Messers. Dies wirkt sich insbesondere in den Umkehrbereichen der Hin- und Herbewegung günstig aus, da beim Richtungswechsel geringere Antriebskräft erforderlich sind und Messerkräfte entstehen.

Der Messerrücken weist ein konstantes Umfangsprofil über dessen Längserstreckung auf. Dies bedeutet, dass die Kontur über den Umfang im Querschnitt senkrecht zur Längsachse konstant ist. Lokale Durchbrücke, wie zum Beispiel Bohrungen, können hierbei vorgesehen sein, ohne dass sich hierdurch das Umfangsprofil ändert.

Der Messerrücken kann zumindest im Bereich des Befestigungsabschnitts aus einem umgeformten Flachmaterial hergestellt sein, das seine Stabilität durch die Umformung erhält, sodass ein dünneres Material verwendet werden kann als bei herkömmlichen Messerrücken.

Ferner können die Messerklingen aus einem umgeformten Flachmaterial hergestellt sein, das derart umgeformt werden kann, dass sich seine Stabilität aufgrund der Umformung ergibt. Hierdurch kann dünneres Material verwendet werden, als bei herkömmlichen Messerklingen, um weiter Masse zu reduzieren.

Darüber hinaus ist die Herstellung der Messerklingen und insbesondere des Messerrückens deutlich vereinfacht, da zum Beispiel umformende Herstellungsverfahren eingesetzt werden können, um die Profilierung der Messerklingen und des Messerrückens herzustellen.

Durch die zueinander komplementäre Profilierung der Messerklingen und des Messerrückens ist über die Profilierung eine Abstützung der Messerklingen gegen den Messerrücken gewährleistet. Die Befestigung der Messerklingen am Messerrücken kann über herkömmlich bekannte Befestigungsmittel, wie zum Beispiel Schrauben, Nieten oder Klemmmittel erfolgen.

Dadurch, dass der Befestigungsabschnitt des Messerrückens über die gesamte Länge profiliert ausgebildet ist, lässt sich dieser besonders einfach zum Beispiel durch Umformverfahren herstellen.

In einer Ausgestaltung können die Messerklingen jeweils einen Schneidenabschnitt aufweisen, wobei das Material der Messerklingen eine Materialstärke aufweist, die, in der Dickenrichtung des Materials, geringer ist als die Höhe der Messerklingen im Schneidenabschnitt.

Somit ist die Messerklinge auch in dem Schneidenabschnitt umgeformt, sodass die Messerklinge im Schneidenabschnitt eine größere Höhe aufweist, als das Material in Dickenrichtung.

Mit der Höhe der Messerklinge und der Höhe des Befestigungsabschnitts des Messerrückens ist jeweils eine Höhe in Richtung einer Höhenachse gemeint. Die Messerklingen erstrecken sich im Wesentlichen in einer Klingenebene, wobei die Höhenachse quer zu dieser Klingenebene angeordnet ist.

Gemäß einem Ausführungsbeispiel weisen die Messerklingen jeweils einen Schneidenabschnitt mit Schneidkanten auf, die in einer Schneidebene angeordnet sind. Die Schneidebene stellt hierbei die Messerebene dar oder ist parallel zu dieser angeordnet. Die Befestigungsfläche des Messerrückens ist derart profiliert, dass sie zumindest eine Anlagefläche bildet. Die Befestigungsflächen der Messerklingen sind jeweils derart profiliert ausgebildet, dass sie zumindest eine Stützfläche bilden, über die die Messerklingen in der Schneidebene gegen die Anlagefläche des Messerrückens abgestützt sind.

Somit sind die Messerklingen in der Schneidebene wirksam gegen die Befestigungsfläche abgestützt, sodass Stützkräfte nicht in die Befestigungsmittel, wie zum Beispiel Schrauben oder Nieten, eingeleitet werden. Somit können die Befestigungsmittel kleiner konfiguriert werden oder weniger Befestigungsmittel vorgesehen werden.

Hierbei können die Messerklingen jeweils über die Stützfläche in der Schneidebene und in einer Richtung quer zur Längsachse gegen die Anlagefläche des Messerrückens abgestützt sein. Insbesondere bei Messern für Mähwerk einer landwirtschaftlichen Maschine sind die Messer mit ihrer Längsachse quer zu einer Fahrtrichtung ausgerichtet, sodass sich Schnittkräfte quer zur Längsachse ergeben. Diese werden durch die Abstützung in Richtung quer zur Längsachse der Messerklingen gegen den Messerrücken wirksam abgestützt, ohne dass sie in die Befestigungsmittel eingeleitet werden.

Die Befestigungsfläche des Befestigungsabschnitts des Messerrückens kann an einer den Messerklingen zugewandten Messerrückenoberseite eine in einer Messerrückenebene angeordnete Planfläche und eine gegenüber der Messerrückenebene in Richtung einer von der Messerrückenoberseite abgewandte Messerrückenunterseite zurückversetzte Ausnehmungsfläche aufweisen. Die Höhe des Befestigungsabschnitts des Messerrückens entspricht einem maximalen Abstand zwischen der Messerrückenunterseite und der Planfläche in einer Normalenrichtung zur Messerrückenebene, wobei die Materialstärke des Materials des Befestigungsabschnitts einem Abstand zwischen der Messerrückenunterseite und der Ausnehmungsfläche in der Normalenrichtung zur Messerrückenebene entspricht.

Die Befestigungsflächen der Messerklingen können jeweils an einer dem Messerrücken zugewandten Klingenunterseite eine in einer Messerklingenebene angeordnete Planfläche und eine gegenüber der Messerklingenebene in Richtung einer von der Messerklingenunterseite abgewandten Messerklingenoberseite zurückversetzte Ausnehmungsfläche aufweisen. Die Höhe des Befestigungsabschnitts jeder Messerklinge entspricht einem maximalen Abstand zwischen der Messerklingenoberseite und der Planfläche in einer Normalenrichtung zur Messerklingenebene, wobei die Materialstärke des Materials der Messerklinge einem Abstand zwischen der Messerklingenoberseite und der Ausnehmungsfläche in der Normalenrichtung zur Messerklingenebene entspricht.

Gemäß einem Ausführungsbeispiel kann vorgesehen sein, dass der Befestigungsabschnitt des Messerrückens eine in Längsachse verlaufende und den Befestigungsabschnitten der Messerklingen zugewandte Ausnehmung aufweist. Die Befestigungsabschnitte der Messerklingen können jeweils eine im Querschnitt komplementär zur Ausnehmung des Messerrückens ausgebildete und dem Befestigungsabschnitt des Messerrückens zugewandte Ausbuchtung aufweisen, die in der Ausnehmung des Messerrückens angeordnet ist.

Alternativ oder zusätzlich kann vorgesehen sein, dass die Befestigungsabschnitte der Messerklingen jeweils einer in Längsachse verlaufende und dem Befestigungsabschnitt des Messerrückens zugewandte Ausnehmung aufweisen. Hierbei weist der Befestigungsabschnitt des Messerrückens eine im Querschnitt komplementär zu den Ausnehmungen der Messerklingen ausgebildete und den Befestigungsabschnitten der Messerklingen zugewandte Ausbuchtung auf, wobei die Ausbuchtung des Messerrückens in den Ausnehmungen der Messerklingen angeordnet ist.

Die Messerklingen können jeweils mit maximal einer Schraube am Messerrücken befestigt sein. Eine Abstützung gegen Verdrehen der Messerklingen gegenüber dem Messerrücken ergibt sich durch die komplementäre Profilierung der Messerklingen und des Messerrückens.

In einem Ausführungsbeispiel können die Messerklingen mit einem Schneidenabschnitt über den Messerrücken überstehen und auf einer vom Schneidenabschnitt abgewandten Seite mit einem Hinterkantenabschnitt über den Messerrücken überstehen.

Bevorzugte Ausführungsbeispiele werden im Folgenden anhand der Zeichnungen näher erläutert. Hierin zeigen
- Figur 1: einen Ausschnitt einer Draufsicht auf einen Befestigungsabschnitt eines Messers in einer ersten Ausführungsform,
- Figur 2: einen Querschnitt des Messers gemäß Figur 1,
- Figur 3: eine perspektivische Darstellung des Befestigungsabschnitts gemäß Figur 1 mit einer Messerklinge und
- Figur 4: eine perspektivische Darstellung eines Befestigungsabschnitts eines Messers mit einer Messerklinge in einer zweiten Ausführungsform.

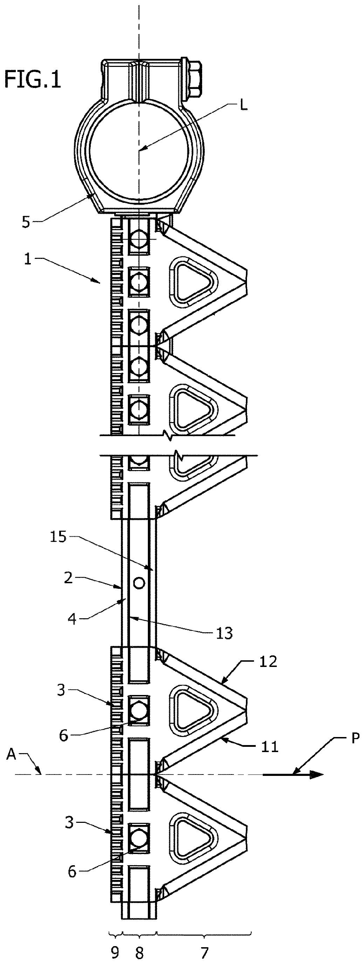

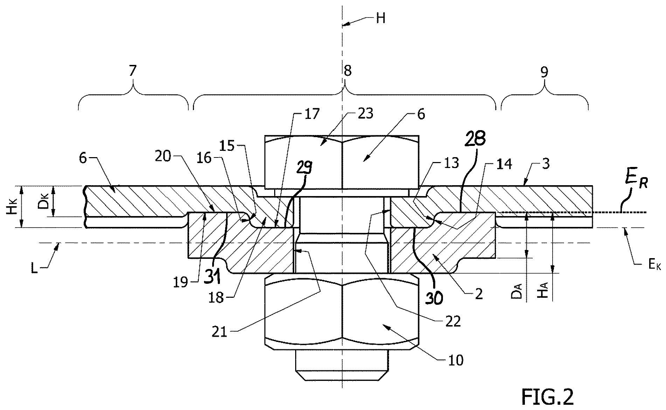

Die Figuren 1 bis 3 zeigen eine erste Ausführungsform eines Messers in unterschiedlichen Ansichten und werden im Folgenden zusammen beschrieben.

Das Messer 1 umfasst einen Messerrücken 2, an dem eine Mehrzahl von Messerklingen 3 befestigt ist. Die Messerklingen 3 sind an einem Befestigungsabschnitt 4 des Messerrückens 2 nebeneinander entlang einer Längsachse L angeordnet und befestigt. Der Befestigungsabschnitt 4 des Messerrückens 2 geht in einen Verbindungsabschnitt 5 des Messerrückens 2 über. Der Verbindungsabschnitt 5 dient zum Anbinden des Messers 1 an einen Messerantrieb zum Hin- und Herbewegen des Messers 1 entlang der Längsachse L. Die Messerklingen 3 können jeweils über eine einzige Schraube 6 am Befestigungsabschnitt 4 des Messerrückens 2 befestigt sein, wie dies in dem in Figur 1 unten dargestellten Abschnitt des Messers 1 der Fall ist, und/oder mit mehreren Schrauben 6, wie dies am, dem Verbindungsabschnitt 5 nahen, oben dargestellten Abschnitt des Messers 1 gezeigt ist.

Die Messerklingen 3 weisen jeweils einen Schneidenabschnitt 7, einen Befestigungsabschnitt 8 und einen Hinterkantenabschnitt 9 auf, die entlang einer Arbeitsrichtungsachse A hintereinander angeordnet sind. Die Arbeitsrichtungsachse A ist senkrecht zur Längsachse L angeordnet und definiert die Ausrichtung einer Arbeitsrichtung P einer landwirtschaftlichen Maschine, in der in Figur 1 dargestellten Orientierung des Messers 1 nach links. Die Arbeitsrichtung P entspricht in der Regel der Fahrtrichtung der landwirtschaftlichen Arbeitsmaschine

In Arbeitsrichtung A betrachtet stehen die Schneidenabschnitte 7 der Messerklingen 3 nach vorne von dem Messerrücken 2 vor. Über den Befestigungsabschnitt 8 sind die Messerklingen 3 jeweils in Anlage zum Befestigungsabschnitt 4 des Messerrückens 2 angeordnet. Die Hinterkantenabschnitte 9 der Messerklingen 3 stehen in Arbeitsrichtung P nach hinten über den Messerrücken 2 vor.

Die Messerklingen 3 sind jeweils aus einem umgeformten Flachmaterial hergestellt, das eine Materialstärke D_{K} beziehungsweise Materialdicke aufweist, die, in einer Dickenrichtung des Flachmaterials, welche einer Höhenachse H, die senkrecht zur Längsachse L und senkrecht zur Arbeitsrichtungsachse A verläuft, ausgerichtet ist und geringer ist als die Höhe H_{K} der Messerklingen 3. Dies wird dadurch erzielt, dass die Messerklingen 3 umgeformt sind, zum Beispiel geprägt, gebogen oder tiefgezogen.

Der Befestigungsabschnitt 4 des Messerrückens 2 ist ebenfalls aus einem umgeformten Flachmaterial hergestellt. Der Befestigungsabschnitt 4 könnte auch aus einem stranggepressten Material hergestellt sein. Das Flachmaterial weist eine Materialstärke bzw. -dicke D_{R} auf, die, in einer Dickenrichtung bzw. in Richtung der Höhenachse H des Flachmaterials, geringer ist als die Höhe H_{R} des Befestigungsabschnitts 4 des Messerrückens 2. Dies wird ebenfalls dadurch erzielt, dass der Befestigungsabschnitt 4 des Messerrückens 2 umgeformt ist. Hierbei weist der Befestigungsabschnitt 4 des Messerrückens 2 über die gesamte Länge des Befestigungsabschnitts 4 entlang der Längsachse L im Querschnitt ein konstantes Umfangsprofil auf.

Der Befestigungsabschnitt 4 des Messerrückens 2 bildet eine Befestigungsfläche 20, die den Befestigungsflächen 19 der Befestigungsabschnitte 8 der Messerklingen 3 zugewandt ist. Im Querschnitt betrachtet sind die Befestigungsfläche 20 des Messerrückens 2 und die Befestigungsflächen 19 der Messerklingen 3 komplementär zueinander profiliert ausgebildet.

Im gezeigten Ausführungsbeispiel bildet der Befestigungsabschnitt 4 des Messerrückens 22 Anlageflächen 13, 15, die einander zugewandt sind. Die Anlageflächen 13, 15 verlaufen zumindest bereichsweise quer zu einer Messerklingenebene E_{K} an einer dem Messerrücken 2 zugewandten Messerklingenunterseite, wobei die Messerklingenebene E_{K} von zwei Schneidkanten 11, 12 der jeweiligen Messerklinge 3 aufgespannt bzw. von einer Planfläche 30 gebildet wird. Die Schneidkanten 11, 12 sind am Schneidenabschnitt 7 der jeweiligen Messerklinge 3 ausgebildet und winklig derart zueinander ausgerichtet, dass sie in Arbeitsrichtung P spitz zulaufen.

Die Befestigungsflächen 19 der Messerklingen 3 bilden jeweils zwei voneinander abgewandte Stützflächen 14, 16, die jeweils mit einer der Anlagefläche 13, 15 des Messerrückens 2 in Anlage sind. Über die Anlageflächen 13, 15 und über die Stützflächen 14, 16 sind die Messerklingen 3 jeweils in Richtung der Arbeitsrichtungsachse A gegeneinander abgestützt.

Im Messerrücken 2 sind je Messerklinge 3 eine Befestigungsbohrung 21 vorgesehen, die im montierten Zustand der Messerklingen 3 jeweils mit einer Befestigungsbohrung 22 der Messerklinge 3 fluchten. Jede Messerklingen 3 ist über eine einzige Schraube 6 am Messerrücken 2 befestigt, wobei sich ein Schraubenkopf 23 gegen die jeweiligen Messerklinge 3 in Richtung der Höhenachse H abstützt und eine Mutter 10 auf einer vom Schraubenkopf 23 abgewandten Seite des Messerrückens 2 gegen den Messerrücken 2 abstützt, sodass die jeweilige Messerklinge 3 auf dem Messerrücken 2 verspannt ist. Ein Verdrehen der Messerklinge 3 um die Schraube 6 wird durch die Anlageflächen 13, 15 und die Stützflächen 14,16 verhindert.

Die Anlageflächen 13, 15 sind in dem gezeigten Ausführungsbeispiel durch eine Ausnehmung 17 im Messerrücken 2 gebildet. Die Ausnehmung 17 weist eine Ausnehmungsfläche 29 auf, die gegenüber einer Planfläche 28 des Messerrückens 2 zurückversetzt ist. Die Planfläche 28 ist in einer Messerrückenebene E_{R} an einer den Messerklingen 3 zugewandten Messerrückenoberseite angeordnet und gegenüber der Messerrückenebene E_{R} in Richtung einer von der Messerrückenoberseite abgewandte Messerrückenunterseite zurückversetzte. In der Ausnehmung 17 sitzen Ausbuchtungen 18 der Messerklingen 3, wobei die Ausbuchtungen 18 jeweils die Stützflächen 14, 16 bilden.

Der Messerrücken 2 weist in seinem Befestigungsabschnitt 4 in Richtung der Längsachse L gesehen, beidseitig neben der Ausnehmung 17 jeweils eine Ausbuchtungen 24, 25 auf, die jeweils in einer Ausnehmung 26, 27 der Messerklingen 3 sitzen.

Die Höhe H_{R} des Befestigungsabschnitts 4 des Messerrückens 2 entspricht einem maximalen Abstand zwischen der Messerrückenunterseite und der Planfläche 28 in einer Normalenrichtung (in Richtung der Höhenachse H) zur Messerrückenebene E_{R}. Die Materialstärke D_{R} des Materials des Befestigungsabschnitts 4 entspricht einem Abstand zwischen der Messerrückenunterseite und der Ausnehmungsfläche 29 des Messerrückens 2 in der Normalenrichtung (in Richtung der Höhenachse H) zur Messerrückenebene E_{R}.

Die Befestigungsflächen 19 der Messerklingen 3 weisen jeweils an der dem Messerrücken 2 zugewandten Messerklingenunterseite die in einer Messerklingenebene E_{K} angeordnete Planfläche 30 und eine gegenüber der Messerklingenebene E_{K} in Richtung der von der Messerklingenunterseite abgewandten Messerklingenoberseite zurückversetzte Ausnehmungsfläche 31 auf. Die Höhe H_{K} des Befestigungsabschnitts 8 der Messerklinge 3 entspricht einem maximalen Abstand zwischen der Messerklingenoberseite und der Planfläche 30 der Messerklinge 3 in einer Normalenrichtung (in Richtung der Höhenachse H) zur Messerklingenebene E_{K}. Die Materialstärke D_{K} des Materials der Messerklinge 3 entspricht einem Abstand zwischen der Messerklingenoberseite und der Ausnehmungsfläche 31 in der Normalenrichtung (in Richtung der Höhenachse H) zur Messerklingenebene E_{K}.

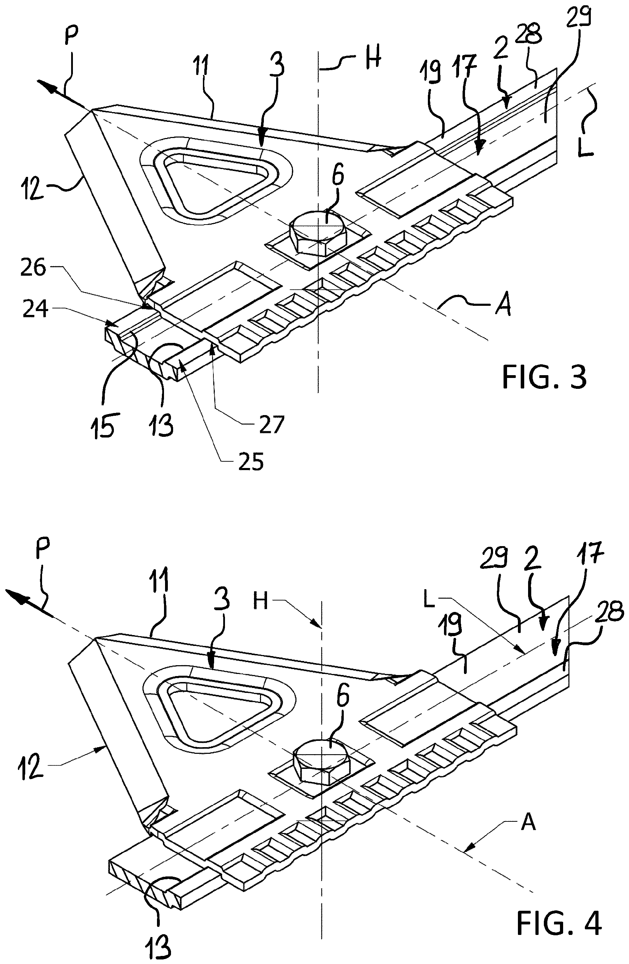

Das Messer 1 gemäß der zweiten Ausführungsform gemäß Figur 4 ist grundsätzlich identisch zu der ersten Ausführungsform, sodass auf das zur ersten Ausführungsform Gesagte verwiesen wird. Merkmale, die mit Merkmalen der ersten Ausführungsform übereinstimmen sind mit denselben Bezugszeichen versehen.

Im Unterschied zur ersten Ausführungsform weist der Messerrücken 2 in seinem Befestigungsabschnitt 4 nur eine Anlagefläche 13 auf. Es ist keine Ausnehmung gebildet, in die die Ausbuchtungen 18 der Messerklingen 3 eintauchen. Vielmehr stützen sich die Messerklingen 3 lediglich axial entgegengesetzt zur Arbeitsrichtung P gegen die Anlagefläche 13 ab.

### Bezugszeichenliste

- 1: Messer
- 2: Messerrücken
- 3: Messerklinge
- 4: Befestigungsabschnitt des Messerrückens
- 5: Verbindungsabschnitt
- 6: Schraube
- 7: Schneidenabschnitt
- 8: Befestigungsabschnitt einer Messerklinge
- 9: Hinterkantenabschnitt
- 10: Mutter
- 11: Schneidkante
- 12: Schneidkante
- 13: Anlagefläche
- 14: Stützfläche
- 15: Anlagefläche
- 16: Stützfläche
- 17: Ausnehmung
- 18: Ausbuchtung
- 19: Befestigungsfläche einer Messerklinge
- 20: Befestigungsfläche des Messerrückens
- 21: Befestigungsbohrung
- 22: Befestigungsbohrung
- 23: Schraubenkopf
- 24: Ausbuchtung
- 25: Ausbuchtung
- 26: Ausnehmung
- 27: Ausnehmung
- 28: Planfläche des Messerrückens
- 29: Ausnehmungsfläche des Messerrückens
- 30: Planfläche einer der Messerklingen
- 31: Ausnehmungsfläche einer der Messerklingen

- A: Arbeitsrichtungsachse
- D_{K}: Materialstärke einer Messerklinge
- D_{R}: Materialstärke des Befestigungsabschnitts des Messerrückens
- E_{R}: Messerrückenebene
- E_{K}: Messerklingenebene
- H: Höhenachse
- H_{K}: Höhe einer Messerklinge
- H_{R}: Höhe des Befestigungsabschnitts des Messerrückens
- L: Längsachse
- P: Arbeitsrichtung

## Patentansprüche

1. Messer (1), insbesondere für ein Mähwerk einer landwirtschaftlichen Maschine, umfassend:
einen Messerrücken (2), der zumindest entlang einer Längsachse (L) einen Befestigungsabschnitt (4) mit einem konstanten Umfangsprofil aufweist, wobei der Befestigungsabschnitt (4) eine Befestigungsfläche (20) zum Befestigen einer Mehrzahl von Messerklingen (3) aufweist, und
mehrere Messerklingen (3) mit jeweils einem Befestigungsabschnitt (8) mit einer Befestigungsfläche (19), mit der die Messerklingen (3) jeweils an der Befestigungsfläche (20) des Messerrückens (2) anliegen, wobei die Messerklingen (3) jeweils aus einem Material hergestellt sind, das eine Materialstärke (D_{K}) aufweist, die, in einer Dickenrichtung (H) des Materials, geringer ist als die Höhe (H_{K}) der Messerklingen (3) quer zur Befestigungsfläche (19),
wobei die Befestigungsfläche (20) des Messerrückens (2) und die Befestigungsflächen (19) der Messerklingen (3) im Querschnitt komplementär zueinander profiliert ausgebildet sind,
**dadurch gekennzeichnet,**
**dass** zumindest der Befestigungsabschnitt (4) des Messerrückens (2) aus einem Material hergestellt ist, das eine Materialstärke (D_{R}) aufweist, die, in einer Dickenrichtung (H) des Materials, geringer ist als die Höhe (H_{R}) des Befestigungsabschnitts (4) des Messerrückens (2) quer zur Befestigungsfläche (20).

2. Messer (1) nach Anspruch 1,
**dadurch gekennzeichnet,**
**dass** das Material des Befestigungsabschnitts (4) des Messerrückens (2) ein umgeformtes Flachmaterial ist.

3. Messer (1) nach Anspruch 1 oder 2,
**dadurch gekennzeichnet,**
**dass** das Material der Messerklingen (3) ein umgeformtes Flachmaterial ist.

4. Messer (1) nach Anspruch 1 bis 3,
**dadurch gekennzeichnet,**
**dass** die Messerklingen (3) jeweils einen Schneidenabschnitt (7) aufweist, wobei das Material der Messerklingen (3) eine Materialstärke (D_{K}) aufweist, die, in der Dickenrichtung (H) des Materials, geringer ist als die Höhe (H_{K}) der Messerklingen (3) im Schneidenabschnitt (7).

5. Messer (1) nach Anspruch 1 bis 4,
**dadurch gekennzeichnet,**
**dass** die Messerklingen (3) jeweils einen Schneidenabschnitt (7) mit Schneidkanten (11, 12) aufweist, die in einer Messerklingenebene (E_{K}) angeordnet sind,
**dass** die Befestigungsfläche (20) des Messerrückens (2) zumindest eine Anlagefläche (13, 15) aufweist und
**dass** die Befestigungsflächen (19) der Messerklingen (3) jeweils zumindest eine Stützfläche (14, 16) aufweisen, mit der die Messerklingen (3) in der Messerklingenebene (E_{K}) gegen die Anlagefläche (13, 15) des Messerrückens (2) abgestützt sind.

6. Messer (1) nach Anspruch 5,
**dadurch gekennzeichnet,**
**dass** die Messerklingen (3) jeweils über die Stützflächen (14, 16) in der Messerklingenebene (E_{K}) und in einer Richtung quer zur Längsachse (L) gegen die Anlagefläche (13, 15) des Messerrückens (2) abgestützt sind.

7. Messer (1) nach einem der Ansprüche 1 bis 6,
**dadurch gekennzeichnet,**
**dass** die Befestigungsfläche (20) des Befestigungsabschnitts (4) des Messerrückens (2) an einer den Messerklingen (3) zugewandten Messerrückenoberseite eine in einer Messerrückenebene (E_{R}) angeordnete Planfläche (28) und eine gegenüber der Messerrückenebene (E_{R}) in Richtung einer von der Messerrückenoberseite abgewandte Messerrückenunterseite zurückversetzte Ausnehmungsfläche (29) aufweist,
**dass** die Höhe (H_{R}) des Befestigungsabschnitts (4) des Messerrückens (2) einem maximalen Abstand zwischen der Messerrückenunterseite und der Planfläche (28) in einer Normalenrichtung zur Messerrückenebene (E_{R}) entspricht und
**dass** die Materialstärke (D_{R}) des Materials des Befestigungsabschnitts (4) einem Abstand zwischen der Messerrückenunterseite und der Ausnehmungsfläche (29) in der Normalenrichtung zur Messerrückenebene (E_{R}) entspricht.

8. Messer (1) nach einem der Ansprüche 1 bis 7,
**dadurch gekennzeichnet,**
**dass** die Befestigungsflächen (19) der Messerklingen (3) jeweils an einer dem Messerrücken (2) zugewandten Messerklingenunterseite eine in einer Messerklingenebene (E_{K}) angeordnete Planfläche (30) und eine gegenüber der Messerklingenebene (E_{K}) in Richtung einer von der Messerklingenunterseite abgewandten Messerklingenoberseite zurückversetzte Ausnehmungsfläche (31) aufweist,
**dass** die Höhe (H_{K}) des Befestigungsabschnitts (8) der Messerklinge (3) einem maximalen Abstand zwischen der Messerklingenoberseite und der Planfläche (30) in einer Normalenrichtung zur Messerklingenebene (E_{K}) entspricht und dass die Materialstärke (D_{K}) des Materials der Messerklinge (3) einem Abstand zwischen der Messerklingenoberseite und der Ausnehmungsfläche (31) in der Normalenrichtung zur Messerklingenebene (E_{K}) entspricht.

9. Messer (1) nach einem der Ansprüche 1 bis 8,
**dadurch gekennzeichnet,**
**dass** der Befestigungsabschnitt (4) des Messerrückens (2) eine in Längsachse (L) verlaufende und den Befestigungsabschnitten (8) der Messerklingen (3) zugewandte Ausnehmung (17) aufweist,
**dass** die Befestigungsabschnitte (8) der Messerklingen (3) jeweils eine im Querschnitt komplementär zur Ausnehmung (17) des Messerrückens (2) ausgebildete und dem Befestigungsabschnitt (4) des Messerrückens (2) zugewandte Ausbuchtung (18) aufweisen, und
**dass** die Ausbuchtungen (18) der Messerklingen (3) in der Ausnehmung (17) des Messerrückens (2) angeordnet ist.

10. Messer (1) nach einem der Ansprüche 1 bis 8,
**dadurch gekennzeichnet,**
**dass** die Befestigungsabschnitte (8) der Messerklingen (3) jeweils eine in Längsachse (L) verlaufende und dem Befestigungsabschnitt (4) des Messerrückens (2) zugewandte Ausnehmung (26, 27) aufweisen,
**dass** der Befestigungsabschnitt (4) des Messerrückens (2) eine im Querschnitt komplementär zu den Ausnehmungen (26, 27) der Messerklingen (3) ausgebildete und den Befestigungsabschnitten (8) der Messerklingen (3) zugewandte Ausbuchtung (24, 25) aufweist, und
**dass** die Ausbuchtung (24, 25) des Messerrückens (2) in den Ausnehmungen (26, 27) der Messerklingen (3) angeordnet ist.

11. Messer (1) nach einem der Ansprüche 1 bis 10,
**dadurch gekennzeichnet,**
**dass** die Messerklingen (3) jeweils mit maximal einer Schraube (6) am Messerrücken (2) befestigt sind.

12. Messer (1) nach einem der Ansprüche 1 bis 11,
**dadurch gekennzeichnet,**
**dass** die Messerklingen (3) mit einem Schneidenabschnitt (7) über den Messerrücken (2) überstehen und
**dass** die Messerklingen (3) auf einer dem Schneidenabschnitt (7) abgewandten Seite mit einem Hinterkantenabschnitt (9) über den Messerrücken (2) überstehen.
